# EUROPEAN PATENT APPLICATION

(11) **EP 4 838 333 A1**
(43) Date of publication of application: **11.11.2026**
(21) Application number: 26176036.7
(22) Date of filing: 01.05.2026
(51) Int. Cl.: G06F 1/16, G06F 3/02, G06F 3/023, G06F 3/038, G06F 13/38

(54) **CONFIGURABLE HOTKEY-BASED PERIPHERAL DEVICE SHARING**

(30) Priority: 06.05.2025 US 202519200535
(71) Applicant: Synaptics Incorporated, San Jose, CA 95131 (US)
(72) Inventor: LAMBORD, Tony David, San Jose, 95131 (US); STROBA, Szymon, San Jose, 95131 (US)
(74) Representative: J A Kemp LLP

(57) **Abstract**

This disclosure provides methods, devices, and systems for sharing peripheral devices. In some implementations, a docking system may receive a first input via a downstream input/output (I/O) interface coupled to one or more peripheral devices; determine a mapping between the downstream I/O interface and a plurality of upstream I/O interfaces coupled to a plurality of computing systems, respectively, based on the first input; receive one or more second inputs via the downstream I/O interface; and route the one or more second inputs to a first upstream I/O interface of the plurality of upstream I/O interfaces based on the determined mapping.

## Description

### TECHNICAL FIELD

The present implementations relate generally to input/output interfaces, and specifically to configurable hotkey-based sharing of peripheral devices amongst computing systems.

### BACKGROUND OF RELATED ART

A computing system, such as a desktop computer, a laptop computer, or a server, may be coupled to one or more peripheral devices, such as keyboards, mice, display devices, speakers, or webcams. A user may operate multiple computing systems within a workspace. A category of devices called "keyboard-video-mouse" (KVM) switches allow a user to use the same set of peripheral devices (e.g., keyboard, video display device, and mouse) with multiple computing systems.

A KVM switch is a hardware interconnect that can couple one or more peripheral devices to one or more computing systems. Some KVM switches include dedicated physical buttons that can be toggled or actuated to select or otherwise switch between multiple computing systems that can communicate with the one or more peripheral devices at any given time. However, dedicated buttons on the KVM switch may not be user-friendly due to their lack of customizability and, depending on the location of the KVM switch, may not be easily accessible to the user.

### SUMMARY

This Summary is provided to introduce in a simplified form a selection of concepts that are further described below in the Detailed Description. This Summary is not intended to identify key features or essential features of the claimed subject matter, nor is it intended to limit the scope of the claimed subject matter.

One innovative aspect of the subject matter of this disclosure can be implemented in a method of sharing peripheral devices between multiple computing systems. The method includes receiving a first input via a downstream input/output (I/O) interface coupled to one or more peripheral devices; determining a mapping between the downstream I/O interface and a plurality of upstream I/O interfaces coupled to a plurality of computing systems, respectively, based on the first input; receiving one or more second inputs via the downstream I/O interface; and routing the one or more second inputs to a first upstream I/O interface of the plurality of upstream I/O interfaces based on the determined mapping.

Another innovative aspect of the subject matter of this disclosure can be implemented in a docking system including one or more processors and a memory. The memory stores instructions that, when executed by the one or more processors, cause the docking system to receive a first input via a downstream input/output (I/O) interface coupled to one or more peripheral devices; determine a mapping between the downstream I/O interface and a plurality of upstream I/O interfaces coupled to a plurality of computing systems, respectively, based on the first input; receive one or more second inputs via the downstream I/O interface; and route the one or more second inputs to a first upstream I/O interface of the plurality of upstream I/O interfaces based on the determined mapping.

### BRIEF DESCRIPTION OF THE DRAWINGS

The present implementations are illustrated by way of example and are not intended to be limited by the figures of the accompanying drawings.
FIG. 1 shows a block diagram of an example peripheral device sharing system, according to some implementations.
FIG. 2 shows another block diagram of an example peripheral device sharing system, according to some implementations.
FIG. 3 shows a block diagram of an example docking system, according to some implementations.
FIG. 4 shows an illustrative flowchart depicting an example operation for sharing peripheral devices, according to some implementations.

### DETAILED DESCRIPTION

In the following description, numerous specific details are set forth such as examples of specific components, circuits, and processes to provide a thorough understanding of the present disclosure. The term "coupled" as used herein means connected directly to or connected through one or more intervening components or circuits. The terms "electronic system" and "electronic device" may be used interchangeably to refer to any system capable of electronically processing information. Also, in the following description and for purposes of explanation, specific nomenclature is set forth to provide a thorough understanding of the aspects of the disclosure. However, it will be apparent to one skilled in the art that these specific details may not be required to practice the example embodiments. In other instances, well-known circuits and devices are shown in block diagram form to avoid obscuring the present disclosure. Some portions of the detailed descriptions which follow are presented in terms of procedures, logic blocks, processing and other symbolic representations of operations on data bits within a computer memory.

These descriptions and representations are the means used by those skilled in the data processing arts to most effectively convey the substance of their work to others skilled in the art. In the present disclosure, a procedure, logic block, process, or the like, is conceived to be a self-consistent sequence of steps or instructions leading to a desired result. The steps are those requiring physical manipulations of physical quantities. Usually, although not necessarily, these quantities take the form of electrical or magnetic signals capable of being stored, transferred, combined, compared, and otherwise manipulated in a computer system. It should be borne in mind, however, that all of these and similar terms are to be associated with the appropriate physical quantities and are merely convenient labels applied to these quantities.

Unless specifically stated otherwise as apparent from the following discussions, it is appreciated that throughout the present application, discussions utilizing the terms such as "accessing," "receiving," "sending," "using," "selecting," "determining," "normalizing," "multiplying," "averaging," "monitoring," "comparing," "applying," "updating," "measuring," "deriving" or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

In the figures, a single block may be described as performing a function or functions; however, in actual practice, the function or functions performed by that block may be performed in a single component or across multiple components, and/or may be performed using hardware, using software, or using a combination of hardware and software. To clearly illustrate this interchangeability of hardware and software, various illustrative components, blocks, modules, circuits, and steps have been described below generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure. Also, the example input devices may include components other than those shown, including well-known components such as a processor, memory and the like.

The techniques described herein may be implemented in hardware, software, firmware, or any combination thereof, unless specifically described as being implemented in a specific manner. Any features described as modules or components may also be implemented together in an integrated logic device or separately as discrete but interoperable logic devices. If implemented in software, the techniques may be realized at least in part by a non-transitory processor-readable storage medium including instructions that, when executed, performs one or more of the methods described above. The non-transitory processor-readable data storage medium may form part of a computer program product, which may include packaging materials.

The non-transitory processor-readable storage medium may comprise random access memory (RAM) such as synchronous dynamic random-access memory (SDRAM), read only memory (ROM), non-volatile random access memory (NVRAM), electrically erasable programmable read-only memory (EEPROM), FLASH memory, other known storage media, and the like. The techniques additionally, or alternatively, may be realized at least in part by a processor-readable communication medium that carries or communicates code in the form of instructions or data structures and that can be accessed, read, and/or executed by a computer or other processor.

The various illustrative logical blocks, modules, circuits and instructions described in connection with the embodiments disclosed herein may be executed by one or more processors (or a processing system). The term "processor," as used herein may refer to any general-purpose processor, special-purpose processor, conventional processor, controller, microcontroller, and/or state machine capable of executing scripts or instructions of one or more software programs stored in memory.

As described above, a KVM switch can allow multiple computing systems to share the same set of peripheral devices. For example, the peripheral devices can be coupled to a downstream input/output (I/O) interface of the KVM switch, and each of the computing systems can be coupled to a respective upstream I/O interface of the KVM switch. A user can select one of the computing systems to communicate with the peripheral devices at any given time. The KVM switch can receive input signals from one or more input devices coupled to the downstream I/O interface and route the input signals to the selected computing system via the respective upstream I/O interface. The KVM switch can also receive output signals from the selected computing system via the respective upstream I/O interface and route the output signals to one or more output devices coupled to the downstream I/O interface.

Various aspects of this disclosure relate generally to input/output interfaces, and more particularly, to configurable hotkey-based sharing of peripheral devices between multiple computing systems. In some aspects, various functionality of a KVM switch may be implemented in a docking system. As used herein, a docking system (which may also be referred to as a "docking station," "dock," "port replicator," or "hub"), is a system or device that can provide hardware expansion, I/O passthrough, I/O duplication, and/or I/O conversion for one or more computing systems. Examples of docking systems can include, but are not limited to, external docking stations, port replicators, and peripheral devices (such as display devices and/or monitors) with integrated hardware expansion and/or I/O capabilities. In some aspects, a docking system may include a downstream I/O interface and multiple upstream I/O interfaces (similar to a KVM switch). One or more computing systems can couple to, or "dock" at, the docking system via respective upstream I/O interfaces, and one or more peripheral devices can be coupled to the docking system via the downstream I/O interface. The docking system can be configured to receive a first input via a downstream input/output (I/O) interface coupled to one or more peripheral devices; determine a mapping between the downstream I/O interface and a plurality of upstream I/O interfaces coupled to a plurality of computing systems, respectively, based on the first input; receive one or more second inputs via the downstream I/O interface; and route the one or more second inputs to a first upstream I/O interface of the plurality of upstream I/O interfaces based on the determined mapping.

Particular implementations of the subject matter described in this disclosure can be implemented to realize one or more of the following potential advantages. By allowing user configuration of inputs that function as hotkeys (also referred to as "hotkey inputs") for selection of upstream I/O interfaces, aspects of the present disclosure can enable efficient routing of communications between multiple computing systems to be in communication with a shared set of peripheral devices. Accordingly, aspects of the present disclosure can improve the efficiency of sharing peripheral devices by computing systems.

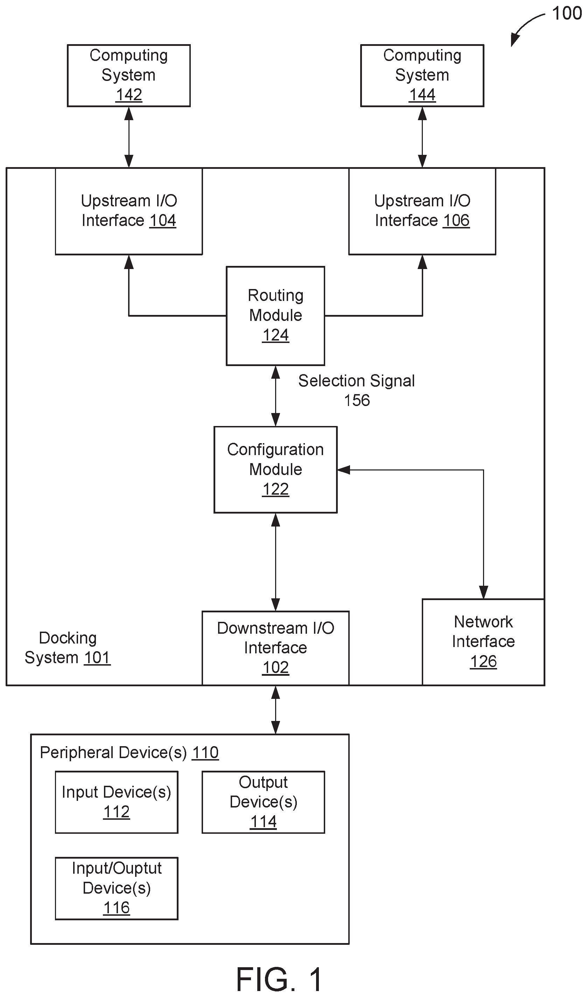

FIG. 1 shows a block diagram of an example peripheral device sharing system 100, according to some implementations. The peripheral sharing system 100 includes a set of one or more peripheral devices 110 that can be coupled to multiple computing systems 142 and 144 via a docking system 101.

A peripheral device 110 may be any hardware component that can provide inputs to, and/or receive outputs from, a computing system (e.g., computing system 142 or 144). Peripheral devices 110 can include input devices 112, output devices 114, and input/output devices 116.

An input device 112 can be any device that sends data or signals to a computing system (also referred to as "input data"). An input device 112 may generate input data based on user action with one or more features of the input device (e.g., keystrokes, mouse movement, pressing a game controller button, a user speaking a voice command within a vicinity of a microphone, a user moving or gesturing within a field of view of an image sensor) and/or sensory input (e.g., a microphone capturing sounds, an image sensor capturing images). Examples of input devices 112 include, but are not limited to, mice, keyboards, scanners, game controllers, microphones, and image sensors (e.g., webcams, cameras).

An output device 114 can be any device that receives data or signals from a computing system (also referred to as "output data"). An output device 114 may render, display, or otherwise reproduce the output data in an appropriate medium (e.g., visual display, audio, printing onto paper). Examples of output devices 114 include, but are not limited to, printers, headphones, speakers, and display devices.

An input/output device 116 can be any device that sends input data to and/or receives output data from a computing system. Examples of input/output devices 116 include, but are not limited to, storage devices (e.g., disk drive, flash drive), modems, routers, network adapters, and combination printer-scanners. In some implementations, an input/output device 116 may have capabilities of both an input device (e.g., by providing input data to a computing system based on user action and/or sensory input) and an output device (e.g., by receiving output data from a computing system in an appropriate medium). Examples of such an input/output device include, but are not limited to, a touchscreen display device.

A computing system 142 or 144 can be any device that includes one or more processors, memory, and/or one or more applications stored in the memory which may be executed by the one or more processors. Examples of computing systems 142/144 include, but are not limited to, desktop computers, laptop computers, servers, mobile phones and tablets.

The docking system 101 includes a downstream input/output (I/O) interface 102, a first upstream I/O interface 104, a second I/O interface 106, a routing module 124, a network interface 126, and a configuration module 122. The downstream I/O interface 102 can be communicatively coupled to the peripheral devices 110. In some implementations, the downstream I/O interface 102 may include one or more physical I/O ports (e.g., Universal Serial Bus (USB), High-Definition Multimedia Interface (HDMI), or DisplayPort ports) that can be coupled to respective I/O ports or interfaces of one or more peripheral devices 110 via physical communication media (such as cables or wires). In some other implementations, the downstream I/O interface 102 may include one or more wireless communication interfaces (e.g., Bluetooth, near-field communication (NFC), or Wi-Fi) that can communicate with respective wireless communication interfaces of one or more peripheral devices 110 via a wireless communication medium (such as air).

Also, in some implementations, a physical I/O port included in the downstream I/O interface 102 may accept a wireless dongle (e.g., a Bluetooth dongle coupled to a USB port in the downstream I/O interface 102) that may establish a wireless connection with one or more peripheral devices 110. That is, a peripheral device 110 may be communicatively coupled to a wireless dongle that is coupled to a physical I/O port in the downstream I/O interface 102. Further, in some implementations, multiple peripheral devices 110 may be coupled to the downstream I/O interface 102 (e.g., to a USB port) in a daisy chain or in a hub-and-spoke arrangement. Thus, the downstream I/O interface 102 may couple to any number of peripheral devices 110 by wire and/or wirelessly.

Each upstream I/O interface 104 or 106 can be communicatively coupled to a respective computing system (e.g., computing system 142 or 144). In some implementations, the upstream I/O interface 104 or 106 may include one or more physical I/O ports (e.g., USB ports, HDMI ports, DisplayPort ports, etc.) that can be coupled to respective I/O ports or interfaces of a computer system 142 or 144 via physical communication media (such as cables or wires). In some other implementations, the upstream I/O interface 104 or 106 may include one or more wireless communication interfaces (e.g., Bluetooth, NFC, or Wi-Fi) that can communicate with respective wireless communication interfaces of a computer system 142 or 144 via a wireless communication medium. As shown, computing system 142 is coupled to upstream I/O interface 104, computing system 144 is coupled to upstream I/O interface 106. While FIG. 1 shows the docking system 101 having two upstream I/O interfaces 104 and 106, each for coupling to a respective computing system, a docking system may have more than two upstream I/O interfaces. For example, a docking system with three upstream I/O interfaces may be coupled to up to three computing systems, where each upstream I/O interface is coupled to a respective computing system.

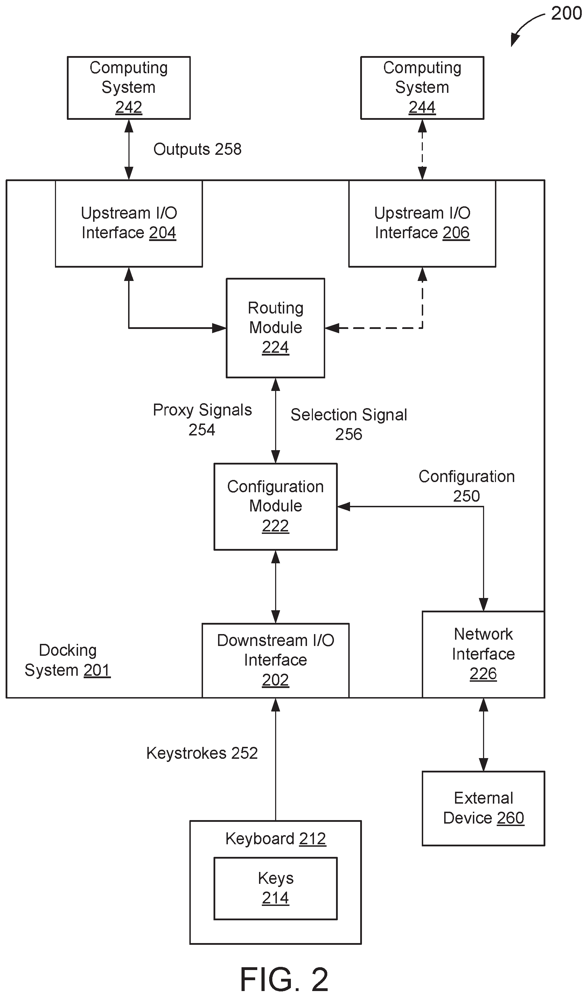

The configuration module 122 may include a user interface that can create and execute hotkey inputs (e.g., configuration 250, FIG. 2). In some implementations, the configuration module 122 may guide a user in creating hotkey inputs through an application, webpage, or the like. As used herein, the term "hotkey input" refers to any user input or combination of inputs that can be linked or otherwise associated with a mapping between the downstream I/O interface 102 and one of the upstream I/O interfaces (e.g., upstream I/O interface 104 or 106). For example, a first hotkey input ("Input A") can be linked to a mapping of the downstream I/O interface 102 to the upstream I/O interface 104 ("Mapping A"). Similarly, a second hotkey input ("Input B") can be linked to a mapping of the downstream I/O interface 102 to the upstream I/O interface 106 ("Mapping B").

A user may access the configuration module 122 via the network interface 126. For example, the configuration module 122 may be accessible via an application installed on a smartphone (e.g., a web browser, a docking system configuration app) or other device external to the docking system 101. The smartphone may communicatively couple to the docking system 101 via the network interface 126 (e.g., by establishing a wireless connection, such as via Bluetooth). A user may interact with the configuration module 122 though the application to create one or more hotkey inputs (e.g., a combination of inputs and a mapping to which the combination of inputs is linked). The application may send the created hotkey inputs to the configuration module 122 (e.g., via an application programming interface (API)). The configuration module 122 may store the created hotkey input in a memory or storage (not shown) of the docking system 101.

As another example, the configuration module 122 may be accessible via a remote webpage or application. A remote computing device or system loading the webpage or application may communicatively couple to the docking system 101 via the network interface 126 (e.g., over a corporate network, network cloud, or the Internet). A user (e.g., a user of the docking system 101, an administrator managing a deployment of docking systems) may interact with the configuration module 122 through the remote webpage or application to create one or more hotkey inputs. The remote webpage or application may send the created hotkey inputs to the configuration module 122 (e.g., via an application programming interface (API)). The configuration module 122 may store the created hotkey input in a memory or storage (not shown) of the docking system 101. As such, a webpage or application for accessing the configuration module 122 may be deployed within an organization (e.g., for corporate deployments of docking systems 101).

In some implementations, the configuration module 122 may communicate with the downstream I/O interface 102, in addition to the network interface 126. For example, the configuration module 122 may include an on-screen display (OSD) interface. The configuration module 122 may output the OSD interface to a display device amongst output devices 114, via the downstream I/O interface 102. A user may interact with the OSD interface using an input device 112 and/or an input/output device 116 to create hotkey inputs.

The network interface 126 may be configured to communicatively couple, and interface, with a computing device or system accessing the configuration module 122 (e.g., a device or system hosting the above-described smartphone app or remote webpage). The network interface 126 may communicatively couple with the computing device or system via any technically suitable and feasible wired or wireless protocol (e.g., Ethernet, Bluetooth, Wi-Fi, etc.).

In some implementations, the configuration module 122 may be configured to monitor signals that originate from the peripheral devices 110 and are received from the downstream I/O interface 102. The configuration module 122 may monitor the signals for known hotkey inputs (e.g., one or more keystrokes matching a hotkey) being transmitted from the peripheral devices 110. In response to detecting a hotkey input in the monitored signals, the configuration module 122 may implement a mapping associated with the hotkey input. For example, the configuration module 122 may send a selection signal 156 to the routing module 124 to select one of the upstream I/O interfaces 104 or 106. In some implementations, the configuration module 122 may pass on signals received from the downstream I/O interface 102 that do not match a hotkey input through to the routing module 124.

In some implementations, the configuration module 122 may be configured to perform one or more functions of a proxying or emulation module. That is, the configuration module 122 may be configured to serve as a proxy for the peripheral devices 110, coupled to the downstream I/O interface 102, to the computing systems 142 and 144 coupled to the upstream I/O interfaces 104 and 106, respectively. The configuration module 122 may proxy the peripheral devices 110 by emulating the one or more peripheral devices 110 to the upstream I/O interfaces 104 and 106. As such, the computing systems 142 and 144 may operate as if the peripheral devices 110 are coupled to the computing system, unaware that the peripheral devices 110 are coupled via the docking system 101. For example, a computer system that requires constant communication with a coupled peripheral device (e.g., for regular peripheral device status checks), even when the peripheral device is not being actively used, may communicate with the configuration module 122 serving as a proxy for the peripheral device. Thus, the configuration module 122 may facilitate low-latency switching between upstream I/O interfaces 104 and 106; by having the configuration module 122 emulate the peripheral devices 110, the computing systems 142 and 144 may treat the peripheral devices 110 as coupled and not disconnected when switching between computing systems. The configuration module 122 may generate proxy data or signals to emulate input data or signals received from the downstream I/O interface 102, for sending to the selected upstream I/O interface 104 or 106.

The routing module 124 is configured to route data and signals between the downstream I/O interface 102 and one of the upstream I/O interfaces 104 or 106 based on selection signal 156 from the configuration module 122. For example, the routing module 124 can route input signals from the downstream I/O interface 102 to the selected upstream I/O interface 104 or 106 . The routing module 124 can also route output signals from the selected upstream I/O interface 104 or 106 to the downstream I/O interface 102. The routing module 124 may maintain the selection or routing configuration until it receives a different selection signal from the configuration module 122. In some implementations, the routing module 124 may be implemented using a multiplexer or switching circuitry.

FIG. 2 shows another block diagram of an example peripheral device sharing system 200, according to some implementations. In particular, FIG. 2 illustrates an example of user configuration of hotkey inputs for a docking system and detecting of an instance of a hotkey input by the docking system. In some implementations, the peripheral device sharing system 200 is an example of the peripheral device sharing system 100.

As shown, the peripheral device sharing system 200 includes a docking system 201. The docking system 201 includes a downstream I/O interface 202, upstream I/O interfaces 204 and 206, a configuration module 222, a routing module 224, a network interface 226, and a configuration module 222. In some implementations, the docking system 201 is an example of docking system 101, and the above-listed components of the docking system 201 are examples of downstream I/O interface 102, upstream I/O interfaces 104 and 106, configuration module 122, routing module 124, network interface 126, and configuration module 122, respectively.

Further as shown, a keyboard 212, with keys 214, is coupled to the downstream I/O interface 202. In some implementations, the keyboard 212 is a specific example of a peripheral device 110, in particular of an input device 112. Computing systems 242 and 244 are coupled to upstream I/O interfaces 204, and 206, respectively. In some implementations, the computing systems 242 and 244 are examples of computing systems 142 and 144, respectively.

As shown, the docking system 201 (e.g., the configuration module 222) receives a configuration 250 from a computing device or system (e.g., external device 260) external to the docking system 201 via the network interface 226. For example, a user may interface with the configuration module 222 from an application or webpage on the external device 260 and create the configuration 250 for sending to the configuration module 222). The configuration 250 includes definitions of hotkey inputs created by a user. The configuration module 222 may store the configuration 250 in a memory or storage (not shown) of the docking system 201. In response to detection of a hotkey input by the configuration module 222, the configuration module 222 sends a selection signal 256 to the routing module 224 to select the upstream I/O interface in the mapping associated with the hotkey input. In some implementations, the selection signal 256 is an example of the selection signal 156.

In some implementations, a hotkey input may include one or more keystrokes made on keys 214 of the keyboard 212. The hotkey input keystrokes may include held keys (e.g., similar to Control-Alt-Delete on PC computers) and/or keystrokes made in succession. For example, a hotkey input may include the keystrokes Control-Alt-1 for selecting upstream I/O interface 204, and Control-Alt-2 for selecting upstream I/O interface 206. In this case, the configuration 250 may include definitions of Control-Alt-1 and Control-Alt-2 as respective hotkey inputs and associations of those hotkey inputs to mappings between the downstream I/O interface 202 and upstream I/O interface 204 and upstream I/O interface 206, respectively.

In some implementations, a hotkey input may operate more like a cycling switch. Instead of selecting a specific upstream I/O interface, operation of the hotkey input may select an upstream I/O interface in a sequence (e.g., cycling through the multiple upstream I/O interfaces). For example, if the hotkey input is Control-Alt-Shift-Tab, and the hotkey input is configured to cycle through the upstream I/O interface in a sequence, each instance of the hotkey input (e.g., a keystroke of the Tab key while the Control-Alt-Shift keys are held) selects the next upstream I/O interface in the sequence, eventually looping back to the beginning of the sequence when the sequence is completed. In this case, an association of the hotkey input to a mapping is not required.

In some implementations, the hotkey input may include inputs made on other peripheral devices 110 besides a keyboard 212. For example, the hotkey input may include a custom mouse pointer movement and/or position (e.g., the mouse moves the pointer to a top left corner of a display and then to a top right corner of the display), a custom voice command (e.g., "Hey Dock, select system 1") that may be captured by a microphone amongst peripheral devices 110, or a hand gesture that may be captured by a webcam amongst peripheral devices 110 (e.g., a hand swipe left or right).

The docking system 201 may receive keystrokes 252 made on keys 214 of the keyboard 212. The configuration module 222 may monitor the keystrokes 252 to detect a hotkey input included in the configuration 250. In response to detecting the hotkey input amongst the keystrokes 252, the configuration module 222 may send a selection signal 256 to the routing module 224 based on the mapping associated with the detected hotkey input. In some other implementations, if the hotkey input is configured to cycle through the upstream I/O interfaces, the selection signal 256 may be a signal to select the next upstream I/O interface in the cycle sequence.

For keystrokes amongst keystrokes 252 that do not correspond to the hotkey input, in some implementations the configuration module 222 may pass those non-hotkey keystrokes on to the routing module 224. The routing module 224 may transmit those non-hotkey keystrokes to the selected upstream I/O interface, which is upstream I/O interface 204 as shown. In some other implementations, the configuration module 222 may generate proxy signals 254 emulating those non-hotkey keystrokes and send those proxy signals 254 to the routing module 224. The routing module 224 may route the proxy signals 254 to the selected upstream I/O interface 204. It should be appreciated that the configuration module 222 and routing module 224 may operate similarly with respect to other input data originating from the peripheral devices coupled to the downstream I/O interface 202. For example, for speech captured by a microphone, the configuration module 222 may detect a hotkey input voice command within the speech and send a selection signal 256 to the routing module 224 based on the detected voice command. The configuration module 222 may pass on speech signals not corresponding to the hotkey input voice command to the routing module 224.

The docking system 201 may receive output data from a computing system coupled to an upstream I/O interface. For example, as shown, computing system 242 may send outputs 258 to the upstream I/O interface 204, which sends those outputs 258 to the routing module 224. The routing module 224 may pass those outputs 258 on to the configuration module 222, which may pass those outputs 258 on to the downstream I/O interface 202. In some implementations, output data sent by a computing system coupled to a not-selected upstream I/O interface may be disregarded. For example, as shown, output data sent by computing system 224 to the upstream I/O interface 206 may be received and disregarded by the routing module 224.

Thus, as described above, in response to the hotkey input detected in the keystrokes 252, the configuration module 222 may determines that the upstream I/O interface 204 is to be selected and mapped to the downstream I/O interface 202. Accordingly, data and signals are sent and received between upstream I/O interface 204 and downstream I/O interface 202.

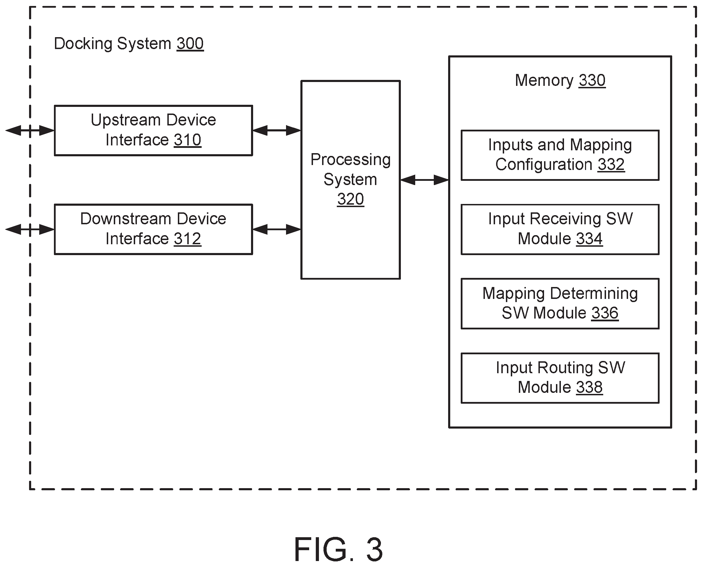

FIG. 3 shows a block diagram of an example docking system 300, according to some implementations. More specifically, the docking system 300 may be configured to facilitate orderly sharing of peripheral devices amongst computing systems. In some implementations, the docking system 300 may be one example of the docking system 101 of FIG. 1 or the docking system 201 of FIG. 2. The docking system 300 includes an upstream device interface 310, a downstream device interface 312, processing system 320, and a memory 330.

The upstream device interface 310 is configured to communicate with one or more computing systems (such as computing system 142 or 144) coupled to the upstream device interface 310. In some implementations, the docking system 300 may include multiple upstream device interfaces 310, each upstream device interface configured to communicate with a respective computing system coupled to the upstream device interface. In some implementations, the upstream device interface 310 is an example of an upstream I/O interface 104 or 106 of FIG. 1, or of an upstream I/O interface 204 or 206 of FIG. 2.

The downstream device interface 312 is configured to communicate with one or more peripheral devices (such as peripheral devices 110) coupled to the downstream device interface 312. In some implementations, the downstream device interface 312 is an example of a downstream I/O interface 102 of FIG. 1 or a downstream I/O interface 202 of FIG. 2.

The memory 330 may include an inputs and mapping configuration store 332 configured to store one or more definitions of user-custom inputs and mappings of those user-custom inputs to respective upstream device interfaces. The memory 330 also may include a non-transitory computer-readable medium (including one or more nonvolatile memory elements, such as EPROM, EEPROM, Flash memory, or a hard drive, among other examples) that may store at least the following software (SW) modules:
- an input receiving SW module 334 to receive a first input and one or more second inputs via the downstream device interface 312;
- a mapping determining SW module 336 to determine determining a mapping between the downstream device interface and a plurality of upstream device interfaces coupled to a plurality of computing systems, respectively, based on the first input; and
- an input routing SW module 338 to route the one or more second inputs to a first upstream device interface of the plurality of upstream device interfaces based on the determined mapping.
Each software module includes instructions that, when executed by the processing system 320, causes the docking system 300 to perform the corresponding functions.

The processing system 320 may include any suitable one or more processors capable of executing scripts or instructions of one or more software programs stored in the docking system 300 (such as in the memory 330). For example, the processing system 320 may execute the mapping determining SW module 336 to determine determining a mapping between the downstream device interface and a plurality of upstream device interfaces coupled to a plurality of computing systems, respectively, based on the first input, and execute the input routing SW module 338 to route the one or more second inputs to a first upstream device interface of the plurality of upstream device interfaces based on the determined mapping.

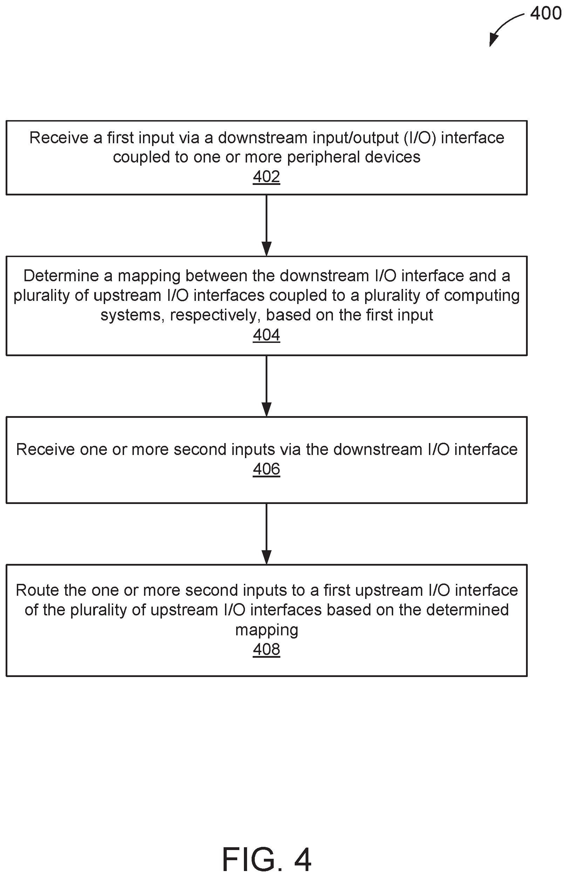

FIG. 4 shows an illustrative flowchart depicting an example operation 400 for sharing peripheral devices, according to some implementations. In some implementations, the example operation 400 may be performed by a docking system, such as the docking system 101 or FIG. 1 or the docking system 201 of FIG. 2.

The docking system may receive a first input via a downstream input/output (I/O) interface coupled to one or more peripheral devices (402). The docking system may determine a mapping between the downstream I/O interface and a plurality of upstream I/O interfaces coupled to a plurality of computing systems, respectively, based on the first input (404). The docking system may receive one or more second inputs via the downstream I/O interface (406). The docking system may route the one or more second inputs to a first upstream I/O interface of the plurality of upstream I/O interfaces based on the determined mapping (408).

In some aspects, the docking system may configure the mapping based on input received via an external device.

In some aspects, the external device is coupled to the docking system via a wireless communication interface.

In some aspects, the external device is coupled to the docking system via one or more communication networks.

In some aspects, the docking system may output a configuration user interface to a first peripheral device via the downstream I/O interface; and receive user input indicating the mapping based on the configuration user interface.

In some aspects, the one or more peripheral devices comprises a keyboard, and the first input comprises one or more keyboard key inputs.

In some aspects, the one or more peripheral devices comprises a microphone, and the first input comprises a voice input.

In some aspects, the one or more peripheral devices comprises an image sensor, and the first input comprises a gesture input.

In some aspects, the downstream I/O interface comprises a Universal Serial Bus (USB) interface.

In some aspects, the first upstream I/O interface comprises a USB interface.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the disclosure.

The methods, sequences or algorithms described in connection with the aspects disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor.

In the foregoing specification, embodiments have been described with reference to specific examples thereof. It will, however, be evident that various modifications and changes may be made thereto without departing from the broader scope of the disclosure as set forth in the appended claims. The specification and drawings are, accordingly, to be regarded in an illustrative sense rather than a restrictive sense.

## Claims

1. A method performed by a docking system, comprising:
receiving a first input via a downstream input/output (I/O) interface coupled to one or more peripheral devices;
determining a mapping between the downstream I/O interface and a plurality of upstream I/O interfaces coupled to a plurality of computing systems, respectively, based on the first input;
receiving one or more second inputs via the downstream I/O interface; and
routing the one or more second inputs to a first upstream I/O interface of the plurality of upstream I/O interfaces based on the determined mapping.

2. The method of claim 1, further comprising configuring the mapping based on input received via an external device.

3. The method of claim 2, wherein the external device is coupled to the docking system via a wireless communication interface.

4. The method of claim 2, wherein the external device is coupled to the docking system via one or more communication networks.

5. The method of claim 1, further comprising:
outputting a configuration user interface to a first peripheral device via the downstream I/O interface; and
receiving user input indicating the mapping based on the configuration user interface.

6. The method of claim 1, wherein the one or more peripheral devices comprises a keyboard, and the first input comprises one or more keyboard key inputs.

7. The method of claim 1, wherein the one or more peripheral devices comprises a microphone, and the first input comprises a voice input.

8. The method of claim 1, wherein the one or more peripheral devices comprises an image sensor, and the first input comprises a gesture input.

9. The method of claim 1, wherein the downstream I/O interface comprises a Universal Serial Bus (USB) interface.

10. The method of claim 1, wherein the first upstream I/O interface comprises a USB interface.

11. A docking system, comprising:
one or more processors; and
a memory storing instructions that, when executed by the one or more processors, cause the docking system to:
receive a first input via a downstream input/output (I/O) interface coupled to one or more peripheral devices;
determine a mapping between the downstream I/O interface and a plurality of upstream I/O interfaces coupled to a plurality of computing systems, respectively, based on the first input;
receive one or more second inputs via the downstream I/O interface; and
route the one or more second inputs to a first upstream I/O interface of the plurality of upstream I/O interfaces based on the determined mapping.

12. The docking system of claim 11, wherein the instructions, when executed by the one or more processors, further cause the docking system to configure the mapping based on input received via an external device.

13. The docking system of claim 12, wherein the external device is coupled to the docking system via a wireless communication interface; or
wherein the external device is coupled to the docking system via one or more communication networks.

14. The docking system of claim 11, wherein the instructions, when executed by the one or more processors, further cause the docking system to:
output a configuration user interface to a first peripheral device via the downstream I/O interface; and
receive user input indicating the mapping based on the configuration user interface.

15. The docking system of claim 11, wherein the one or more peripheral devices comprises a keyboard, and the first input comprises one or more keyboard key inputs; or
wherein the one or more peripheral devices comprises a microphone, and the first input comprises a voice input; or
wherein the one or more peripheral devices comprises an image sensor, and the first input comprises a gesture input; or
wherein the downstream I/O interface comprises a Universal Serial Bus (USB) interface; or
wherein the first upstream I/O interface comprises a USB interface.
